Europäisches Patentamt

European Patent Office

Office européen des brevets

(19)

(11) Veröffentlichungsnummer: **0 041 707**

**A2**

(12) # EUROPÄISCHE PATENTANMELDUNG

(21) Anmeldenummer: 81104328.0

(22) Anmeldetag: 04.06.81

(51) Int. Cl.³: **H 01 M 4/90**
**H 01 M 4/88, B 01 J 31/06**

(30) Priorität: 11.06.80 DE 3021935

(43) Veröffentlichungstag der Anmeldung:
16.12.81 Patentblatt 81/50

(84) Benannte Vertragsstaaten:
DE FR GB

(71) Anmelder: SIEMENS AKTIENGESELLSCHAFT Berlin
und München
Postfach 22 02 61
D-8000 München 22(DE)

(72) Erfinder: Buchner, Peter
Lindenweg 17
D-8551 Heiligenstadt(DE)

(72) Erfinder: Höhne, Karl, Dr.
Reinigerstrasse 15
D-8520 Erlangen(DE)

(72) Erfinder: Grüne, Horst, Dipl.-Phys.
Lachnerstrasse 76
D-8520 Erlangen(DE)

(72) Erfinder: Starbeck, Gerhard
Effeltricher Strasse 32
D-8500 Nürnberg(DE)

(54) Verfahren zur Erzeugung von Gastransportporen in Katalysatormaterialien.

(57) Die Erfindung betrifft ein Verfahren zur Erzeugung von Gastransportporen in Katalysatormaterialien für die elektrochemische Umsetzung gasförmiger Reaktanten durch Hydrophobierung mit einem organischen Polymeren und stellt sich die Aufgabe, ein derartiges Verfahren in der Weise auszugestalten, daß eine Verbesserung der elektrochemischen Eigenschaften des Katalysatormaterials erzielt wird. Dazu ist vorgesehen, das Katalysatormaterial mit einer Lösung von Polysulfon oder Polyvinylchlorid in einem organischen Lösungsmittel zu behandeln, wobei der Gehalt der Lösung an dem organischen Polymeren etwa zwischen 1 und 6 Gew.-% beträgt und auf 1 Gewichtsteil Katalysatormaterial etwa 1 bis 5 Volumenteile, vorzugsweise ca. 2 Volumenteile, der Lösung entfallen. Das erfindungsgemäße Verfahren eignet sich insbesondere bei Silber- und Nickelkatalysatoren für mit Luft betriebene Brennstoffelemente.

FIG 2

SIEMENS AKTIENGESELLSCHAFT          Unser Zeichen
Berlin und München                  VPA 80 P 7 5 3 9 E

Verfahren zur Erzeugung von Gastransportporen in
Katalysatormaterialien

Die Erfindung betrifft ein Verfahren zur Erzeugung von
Gastransportporen in Katalysatormaterialien für die
elektrochemische Umsetzung gasförmiger Reaktanten durch
Hydrophobierung mit einem organischen Polymeren.

Bei der Umsetzung gasförmiger Reaktanten in elektrochemischen Zellen, wie Brennstoffelementen, findet die
elektrochemische Reaktion an einer Dreiphasengrenze
fest(Elektrode bzw. Katalysator)/flüssig(Elektrolyt)/gasförmig(Reaktant) statt. Dazu ist es erforderlich, daß
sowohl der gasförmige Reaktant als auch die Elektrolytflüssigkeit in den porösen Elektrodenkörper eindringt.

Während des Betriebes der elektrochemischen Zellen sind
die feinen Poren, auch die Gastransportporen, mit Elektrolytflüssigkeit gefüllt, wodurch sich die elektrochemischen Eigenschaften verschlechtern. Um das Eindringen
des Elektrolyten in die Gasporen zu verhindern, werden
die Elektroden deshalb bislang mittels einer Suspension
von Polytetrafluoräthylen (PTFE) hydrophobiert. Auch
dabei kann jedoch keine dauerhafte Stabilisierung der
elektrochemischen Werte erreicht werden. Die PTFE-
Partikel sind nämlich relativ groß und setzen sich zum
größten Teil nur auf der Oberfläche des Katalysatorkorns
fest.

Aufgabe der Erfindung ist es, ein Verfahren der eingangs
genannten Art zur Erzeugung von Gastransportporen in

Bh 2 Koe / 9.6.1980

Katalysatormaterialien derart auszugestalten, daß eine
Verbesserung der elektrochemischen Eigenschaften des
Katalysatormaterials erzielt wird.

Dies wird erfindungsgemäß dadurch erreicht, daß das
Katalysatormaterial mit einer Lösung von Polysulfon
oder Polyvinylchlorid in einem organischen Lösungsmittel behandelt wird, wobei der Gehalt der Lösung an dem
organischen Polymeren etwa zwischen 1 und 6 Gew.-%
beträgt und auf 1 Gewichtsteil Katalysatormaterial etwa
1 bis 5 Volumenteile, vorzugsweise ca. 2 Volumenteile,
der Lösung entfallen.

Das erfindungsgemäße Verfahren bewirkt eine erhebliche
Verbesserung der elektrochemischen Eigenschaften von
Katalysatoren. Dies dürfte eine Folge der Tatsache sein,
daß bei diesem Verfahren auch im Inneren der Katalysatorkörner Gastransportporen erzeugt werden.

Die mittels des erfindungsgemäßen Verfahrens erzielbare
Verbesserung der elektrochemischen Eigenschaften von
Katalysatoren zeigt sich beispielsweise bei der Umsetzung von Luftsauerstoff in $H_2$/Luft-Brennstoffelementen
mit alkalischem Elektrolyten. In $H_2/O_2$-Brennstoffelementen ist - bei der Umsetzung von reinem Sauerstoff -
der Einfluß der Korngröße und der Oberflächenstruktur
des verwendeten Katalysators, beispielsweise eines
Silberkatalysators, nicht sehr ausschlaggebend. Bei der
Umsetzung von Luftsauerstoff sind diese Eigenschaften -
wegen des großen Inertgasanteils und des niedrigen
$O_2$-Partialdruckes - jedoch von entscheidender Bedeutung,
wie im folgenden gezeigt wird.

0041707

Ein aus der DE-PS 27 13 855 bzw. der entsprechenden US-PS 4 131 570 bekannter quecksilberhaltiger Silberkatalysator, der eine glatte Kornoberflächenstruktur und beispielsweise eine Korngröße von ca. 30 $\mu$m aufweist, eignet sich in besonderer Weise zur Umsetzung von Luftsauerstoff. Dabei werden aus diesem Katalysator mit Hilfe eines Sedimentationsverfahrens asbest- und PTFE-gebundene hydrophile Luftelektroden hergestellt.

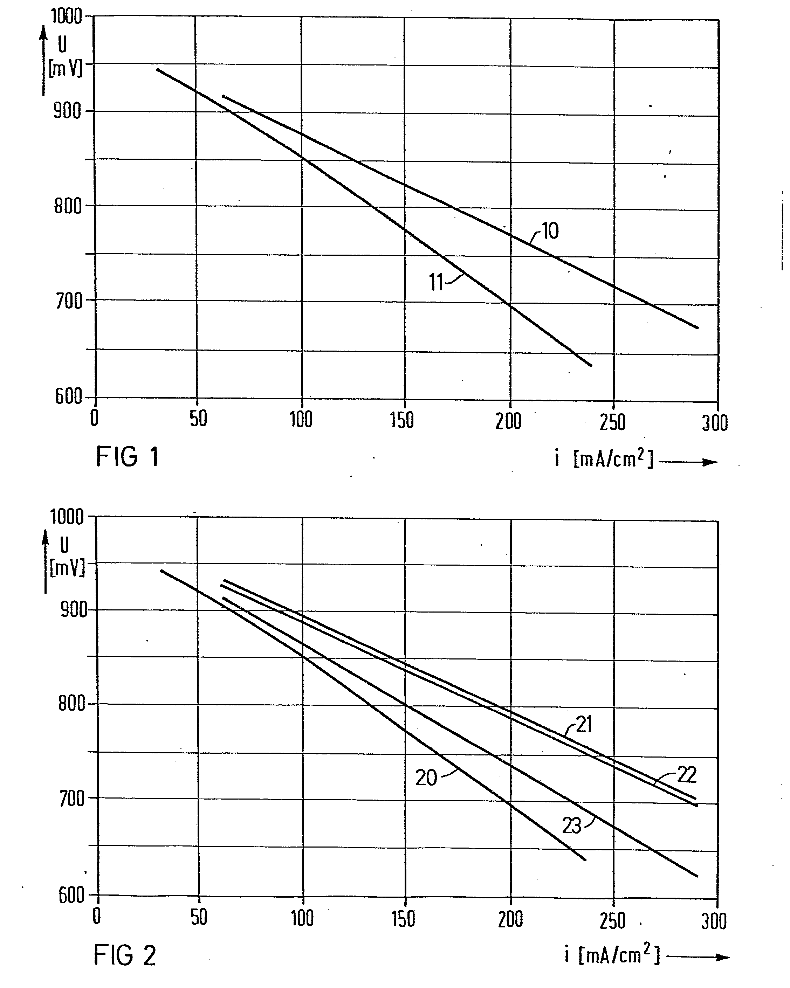

In Fig. 1 ist die Stromdichte-Spannungskennlinie (Stromdichte i in mA/cm$^2$, Spannung U in mV) eines $H_2$/Luft-Brennstoffelementes dargestellt (Kurve 10), dessen Luftelektrode (Kathode) unter Verwendung des bekannten Silberkatalysators mit einem Quecksilbergehalt von ca. 11 Gew.-%, bezogen auf das Gesamtgewicht, hergestellt worden war (Ag/Hg11-Katalysator); die mittlere Korngröße des Katalysatormaterials betrug ca. 30 $\mu$m. Als Anode diente eine Raney-Nickel-Elektrode; Temperatur: 80°C, Luftdruck: 1,3 bar.

Es hat sich nun gezeigt, daß bei der Herstellung des bekannten Katalysators Schwankungen bezüglich der Korngröße auftreten können und daß Luftelektroden aus Katalysatormaterialien mit relativ kleinen Korngrößen wegen der zu engen Gasversorgungs- bzw. Gastransportporen schlechtere elektrochemische Eigenschaften aufweisen.

Dieser Sachverhalt kann Fig. 1 entnommen werden, bei der als Kurve 11 die Kennlinie eines $H_2$/Luft-Brennstoffelementes dargestellt ist, dessen Luftelektrode unter Verwendung eines Ag/Hg11-Katalysators mit einer mittleren Korngröße von ca. 15 $\mu$m hergestellt worden war.

Die negativen Auswirkungen von Katalysatormaterialien mit geringen Korngrößen können nun zwar durch Aussieben bestimmter Korngrößenfraktionen vermieden werden, ein derartiges Vorgehen ist aber nicht nur zeitraubend, sondern insbesondere auch unwirtschaftlich, weil die Fraktionen mit ungeeigneter Korngröße verworfen werden müssen. Demgegenüber gelingt es, wie die nachfolgenden Beispiele zeigen, mit Hilfe des erfindungsgemäßen Verfahrens die Schwierigkeiten zu beseitigen, die sich bislang bei Katalysatormaterialien mit geringen Korngrößen ergeben.

Herstellung des Katalysatormaterials

In eine Kristallisierschale werden 50 g des bekannten Silberkatalysators mit einem Quecksilbergehalt von etwa 11 Gew.-% und einer mittleren Korngröße von ca. 15 $\mu$m gegeben und dann wird die Schale in einen mit einem Tropftrichter versehenen Exsikkator gestellt. Der Exsikkator wird anschließend mit einer Wasserstrahlpumpe ca. 10 min lang evakuiert und dann wird der Tropftrichter mit 100 ml einer Lösung von Polysulfon in Tetrahydrofuran gefüllt, die unter Vakuum schnell auf das pulverförmige Katalysatormaterial getropft wird; als Lösungsmittel für das Polymere kann auch Aceton, Dichlormethan oder Dimethylformamid dienen. Nach ca. 10 min wird der Exsikkator geöffnet und der Silberkatalysator sofort in einer mit einem Filterpapier versehenen Nutsche abgesaugt. Der Filterkuchen wird dann an der Luft getrocknet.

Herstellung der Elektroden

Auf die beschriebene Weise werden Silberkatalysatoren (Korngröße ca. 15 $\mu$m) unter Verwendung von Polysulfon-

0041707

lösungen mit einem Gehalt von 4, 6 und 9 Gew.-% Polysulfon hergestellt. Aus diesen Katalysatoren werden -
gemäß der DE-PS 27 13 855 - durch ein Sedimentationsverfahren asbest- und PTFE-gebundene Luftelektroden
hergestellt, wobei die Mengen an Asbest und PTFE bei
den verschiedenen Elektroden gleich sind (Asbestgehalt:
ca. 0,4 Gew.-%, PTFE-Gehalt: ca. 23 Gew.-%). Diese
Luftelektroden werden in $H_2$/Luft-Brennstoffelemente
eingebaut und dann werden die elektrischen Werte vermessen, wobei als Anoden sedimentierte Raney-Nickel-
Elektroden dienen (Temperatur: 80°C, Luftdruck: 1,3 bar).

In Fig. 2 sind die bei den verschiedenen Elektroden
erhaltenen Stromdichte-Spannungskennlinien dargestellt
und der Kennlinie einer Elektrode mit dem bekannten
Katalysator (Kurve 20) gegenübergestellt. Im Vergleich
mit Kurve 20 zeigt sich, daß unter Verwendung von mit
einer 4 %igen Polysulfonlösung (Kurve 21) bzw. mit
einer 6 %igen Polysulfonlösung (Kurve 22) hergestelltem
Katalysatormaterial eine beträchtliche Verbesserung der
elektrischen Werte erreicht wird, d.h. die Luftsauerstoffumsetzung ist deutlich erhöht. Verwendet man
dagegen eine9 %ige Polysulfonlösung, so erhält man ein
Katalysatormaterial (Kurve 23), das zwar noch eine
bessere Luftumsetzung bewirkt als das bekannte Material,
das im Vergleich zu den Katalysatormaterialien gemäß
Kurven 21 und 22 aber zu einer Verschlechterung der
elektrischen Werte führt. Hierbei macht sich wohl der
durch die Abscheidung des Polymeren hervorgerufene
erhöhte elektrische Widerstand zwischen den Katalysatorkörnern nachteilig bemerkbar.

4 Patentansprüche
2 Figuren

**0041707**

Patentansprüche

1. Verfahren zur Erzeugung von Gastransportporen in Katalysatormaterialien für die elektrochemische Umsetzung gasförmiger Reaktanten durch Hydrophobierung mit einem organischen Polymeren, d a d u r c h g e -k e n n z e i c h n e t , daß das Katalysatormaterial mit einer Lösung von Polysulfon oder Polyvinylchlorid in einem organischen Lösungsmittel behandelt wird, wobei der Gehalt der Lösung an dem organischen Polymeren etwa zwischen 1 und 6 Gew.-% beträgt und auf 1 Gewichtsteil Katalysatormaterial etwa 1 bis 5 Volumenteile, vorzugsweise ca. 2 Volumenteile, der Lösung entfallen.

2. Verfahren nach Anspruch 1, d a d u r c h g e k e n n z e i c h n e t , daß als Lösungsmittel Tetrahydrofuran verwendet wird.

3. Verfahren nach Anspruch 1 oder 2, d a d u r c h g e k e n n z e i c h n e t , daß als Katalysatormaterial Silber oder Nickel verwendet wird.

4. Verfahren nach Anspruch 3, d a d u r c h g e -k e n n z e i c h n e t , daß ein quecksilberhaltiger Silberkatalysator eingesetzt wird.

FIG 1

FIG 2